# FASCICULE DE BREVET EUROPEEN

(11) **EP 3 235 026 B1**
(45) Date de publication et mention de la délivrance du brevet: **02.10.2019**
(21) Numéro de dépôt: 15807962.4
(22) Date de dépôt: 27.11.2015
(51) Int. Cl.: H01M 2/20, H01M 10/617, H01M 10/625, H01M 10/647, H01M 10/04, H01M 10/0525, B60L 3/00, B60L 58/16, B60L 58/21, B60L 50/64

(54) **MODULE DE CELLULES ELEMENTAIRES ET DISPOSITIF DE STOCKAGE D'ENERGIE ELECTRIQUE**
MODUL MIT EINZELZELLEN UND ENERGIESPEICHERVORRICHTUNG
MODULE OF ELEMENTARY CELLS AND ENERGY STORAGE DEVICE

(30) Priorité: 18.12.2014 FR 1462736
(43) Date de publication de la demande: 25.10.2017
(73) Titulaire: Renault S.A.S., 92100 Boulogne-Billancourt (FR)
(72) Inventeur: MARCHAL, Caroline, 75015 Paris (FR); RECOUVREUR, Philippe, 92120 Montrouge (FR); BIDAULT, Fabrice, 75006 Paris (FR)
(86) Numéro de dépôt international: PCT/FR2015/053250
(87) Numéro de publication internationale: WO 2016/097517

(56) Documents cités:
- US-A1- 2013 196 205
- US-A1- 2014 154 602

## Description

La présente invention concerne un module de cellules élémentaires et un dispositif de stockage d'énergie électrique comprenant un tel module.

L'invention concerne aussi un procédé d'assemblage du module de cellules élémentaires et un véhicule comprenant un tel dispositif de stockage d'énergie.

Un véhicule à propulsion ou traction hybride (« HEV » d'après la terminologie anglo-saxonne « Hybrid Electric Vehicle ») est généralement équipé d'un moteur de traction à combustion interne et d'un moteur de traction électrique qui est alimenté par un dispositif de stockage d'énergie électrique embarqué à bord du véhicule, et ce, de manière à pouvoir utiliser plusieurs sources d'énergie.

Un tel dispositif de stockage d'énergie électrique autrement appelé « pack batterie » ou encore « batterie », est pourvu de modules comprenant des cellules élémentaires de stockage de l'énergie électrique également appelées accumulateurs. Plus précisément, ces cellules sont généralement connectées en série et/ou en parallèle pour former ces modules et en particulier un module haute tension et un module basse tension aux bornes de chacun desquels est délivrée une tension.

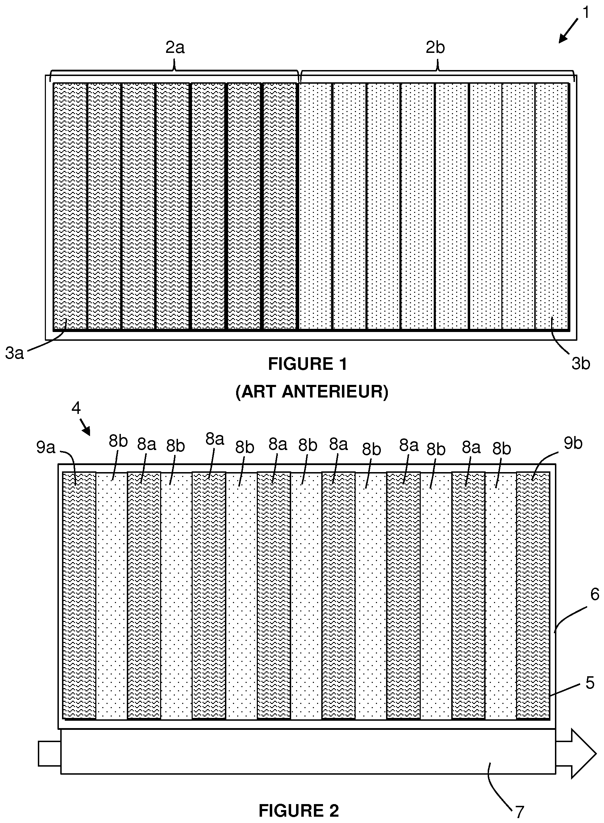

En référence à la figure 1, dans de tels dispositifs de stockage d'énergie 1 selon l'art antérieur, comme par exemple le dispositif décrit dans la demande FR2994896, les cellules élémentaires 3a formant le module haute tension 2a sont regroupées dans une partie définie de ces dispositifs 1 et les cellules élémentaires 3b formant le module basse tension 2b dans une autre partie de ces derniers.

Le document US2013/196205A1 divulgue également des groupes de cellules de batteries physiquement alternées.

Une telle configuration de ces dispositifs de stockage d'énergie 1 à pour inconvénient majeur d'entraîner une hétérogénéité de température entre la partie de ces dispositifs 1 où est compris le module haute tension 2a et celle où est situé le module basse tension 2b. Cette hétérogénéité de température dans ces dispositifs de stockage d'énergie 1 a pour conséquence directe de provoquer une réduction des performances et de la durée de vie de tels dispositifs 1.

La présente invention vise à pallier ces inconvénients des dispositifs de stockage d'électricité comprenant ces modules de l'état de l'art.

Dans ce dessein, l'invention concerne un module de cellules élémentaires de stockage d'énergie électrique comprenant un premier ensemble de cellules élémentaires interconnectées de manière à délivrer une première tension dans un premier domaine de haute tension et un deuxième ensemble de cellules élémentaires interconnectées de manière à délivrer une deuxième tension dans un deuxième domaine de basse tension, les premier et deuxième domaines de tension étant différents, caractérisé en ce que les cellules élémentaires des premier et deuxième ensembles sont agencées dans le module selon une succession de cellules élémentaires alternant entre au moins une cellule élémentaire du premier ensemble et au moins une cellule élémentaire du deuxième ensemble.

Dans d'autres modes de réalisation :
- les contacts électriques positif et négatif des cellules élémentaires du premier ensemble sont situés sur une partie du module opposée à une autre partie du module sur laquelle sont localisés les contacts électriques positif et négatif des cellules élémentaires du deuxième ensemble ;
- les contacts électriques positif et négatif des cellules élémentaires des premier et deuxième ensembles sont situés sur une même partie du module ;
- le module comprend
   - des éléments de connexion d'un premier groupe d'éléments de connexion susceptibles de relier électriquement les contacts électriques des cellules élémentaires du premier ensemble entre eux de manière à délivrer la première tension ;
   - des éléments de connexion d'un deuxième et d'un troisième groupe d'éléments de connexion susceptibles de relier électriquement les contacts électriques des cellules élémentaires du deuxième ensemble entre eux de manière à délivrer la deuxième tension, et/ou
   - un élément de liaison électrique susceptible de connecter un premier circuit électrique formé des cellules élémentaires du premier ensemble et des éléments de connexion du premier groupe avec un deuxième circuit électrique formé des cellules élémentaires du deuxième ensemble et des éléments de connexion des deuxième et troisième groupes.
- le module comprend des première et deuxième bornes de tension positive délivrant respectivement la première et la deuxième tension et une troisième borne de tension négative.

L'invention concerne aussi un dispositif de stockage d'énergie électrique comprenant au moins un tel module.

L'invention concerne également un procédé d'assemblage d'un tel module de cellules élémentaires comprenant une étape d'agencement desdites cellules dans le module selon une succession alternant au moins une cellule élémentaire d'un premier ensemble de cellules élémentaires interconnectées de manière à délivrer une première tension dans un premier domaine de haute tension et une cellule élémentaire d'un deuxième ensemble de cellules élémentaires interconnectées de manière à délivrer une deuxième tension dans un deuxième domaine de basse tension.

Avantageusement, le procédé comprend une étape de connexion des contacts électriques des cellules du premier ensemble par des éléments de connexion d'un premier groupe d'éléments de connexion, de manière à délivrer la première tension, et des contacts électriques des cellules du deuxième ensemble par des éléments de connexion de deuxième et troisième groupes d'éléments de connexion, de manière à délivrer la deuxième tension.

L'invention concerne aussi un véhicule automobile notamment électrique ou hybride, comportant un tel dispositif de stockage d'électricité.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une représentation schématique du dispositif de stockage d'électricité de l'état de l'art ;
- la figure 2 est une représentation schématique d'un dispositif de stockage d'électricité selon le mode de réalisation de l'invention ;
- la figure 3 représente des cellules élémentaires de premier et deuxième ensembles de cellules élémentaires d'un module de cellules élémentaires selon le mode de réalisation de l'invention ;
- la figure 4 représente une vue d'une première partie latérale du module de cellules élémentaires selon le mode de réalisation de l'invention ;
- la figure 5 représente une vue d'une deuxième partie latérale du module de cellules élémentaires selon le mode de réalisation de l'invention ;
- la figure 6 représente une vue d'une partie supérieure du module de cellules élémentaires selon le mode de réalisation de l'invention, et
- la figure 7 est un logigramme relatif à un procédé d'assemblage du module de cellules élémentaires.

Sur la figure 1, le dispositif de stockage d'énergie 4 électrique comprend un module 5 de cellules élémentaires 8a, 9a, 9b, 8b. Un tel dispositif de stockage d'énergie 4 électrique est formé d'un boîtier 6 dans lequel est disposé le module 5 de cellules élémentaires 8a, 9a, 9b, 8b. Ce boîtier 6 a pour fonction de réaliser le maintien et le support du module 5 ainsi que d'assurer son étanchéité vis-à-vis de l'extérieur. Un tel dispositif de stockage d'énergie 4 électrique peut être agencé sur un radiateur 7 dans lequel circule un fluide tel que de l'eau. Ce radiateur 7 participe à l'évacuation de l'énergie calorifique provenant du dispositif 4 et en particulier du module 5 de cellules élémentaires 8a, 9a, 9b, 8b. On notera qu'un tel dispositif 4 peut comprendre plusieurs modules 5 de cellules élémentaires 8a, 9a, 9b, 8b.

Le module 5 est formé de parties arrière 12b, avant 12a, supérieure 12c et inférieure 12d ainsi que de première et deuxième parties latérales 12f, 12e. Ce module 5 comprend des cellules élémentaires 8a, 9a, 9b, 8b que nous appellerons par la suite plus simplement cellules 8a, 9a, 9b, 8b. Ces cellules 8a, 9a, 9b, 8b sont connectées en série et/ou en parallèle et forment ainsi un ensemble qui participe directement à la fonction de stockage et restitution d'énergie électrique. Comme nous le verrons par la suite, ce module 5 comprend des première et deuxième bornes de tension positive 14a, 14b et une borne de tension négative 14c. Ces bornes de tension 14a, 14b, 14c sont également appelées « collecteurs de courant » ou « points de tension ».

Plus précisément, ce module 5 comprend :
- des cellules élémentaires 8a, 9a, 9b d'un premier ensemble de cellules élémentaires d'un premier domaine de tension, et
- des cellules élémentaires 8b d'un deuxième ensemble de cellules élémentaires d'un deuxième domaine de tension.

Les premier et deuxième domaines de tension sont différents et sont choisis parmi les domaines de tension suivants : haute tension et basse tension. Dans ce mode de réalisation, le domaine de tension pour les cellules 8a, 9a, 9b du premier ensemble est la haute tension et celui des cellules 8b du deuxième ensemble est la basse tension.

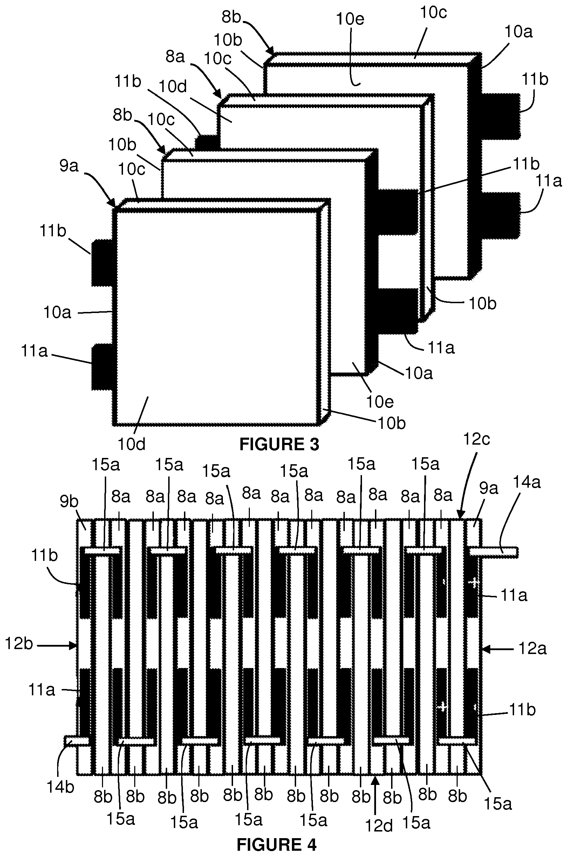

En référence à la figure 3, chacune des cellules 8a, 9a, 9b, 8b des premier et deuxième ensembles peut avoir une section transversale de forme rectangulaire et comprendre :
- des première et deuxième faces latérales 10d, 10e ;
- des faces avant et arrière 10a, 10b, et
- des faces supérieure 10c et inférieure (non représentée).

On notera que dans une variante, chacune des cellules 8a, 9a, 9b, 8b des premier et deuxième ensembles peut avoir une section de forme circulaire.

Pour produire/stocker de l'énergie, chaque cellule 8a, 9a, 9b, 8b comprend, de manière conventionnelle, une cathode et une anode séparées par un électrolyte. L'électrolyte peut être constitué d'un séparateur polymère du type membrane, imbibé d'un polymère électrolyte liquide du type solvant organique avec sel de lithium.

Les cellules 8a, 9a, 9b, 8b des premier et deuxième ensembles comprennent deux contacts électriques tels que des languettes de connexion se présentant sous la forme de fines feuilles métalliques de largeur légèrement inférieure à la largeur de la cellule 8a, 9a, 9b, 8b correspondante. Bien entendu, on conçoit aisément que chaque cellule 8a, 9a, 9b, 8b des premier et deuxième ensembles comprend en réalité une enveloppe extérieure (non représentée) à laquelle sont connectées les languettes. Ces contacts électriques 11a, 11b qui sont de polarités opposées (polarité positive 11a, polarité négative 11b) et communément appelés « connexion tabs » selon la terminologie anglo-saxonne, sont agencés sur la face avant 10a de chacune des cellules 8a, 9a, 9b, 8b des premier et deuxième ensembles.

Sur les figures 2 à 6, les cellules 8a, 9a, 9b, 8b des premier et deuxième ensembles du module 5 sont agencées parallèlement les unes par rapport aux autres selon une succession de cellules 8a, 9a, 9b, 8b alternant entre au moins une cellule 8a, 9a, 9b du premier ensemble et au moins une cellule 8b du deuxième ensemble. Ainsi comme cela est visible notamment sur les figures 3, 4 et 5, si la succession de cellules 8a, 9a, 9b, 8b de ce module 5 débute par une cellule 8a, 9a, 9b du premier ensemble, cette dernière est alors suivie d'une cellule 8b du deuxième ensemble qui est elle-même suivie d'une autre cellule 8a, 9a, 9b du premier ensemble et ce, jusqu'aux dernières cellules 8a, 9a, 9b, 8b des premier et deuxième ensembles.

Dans cette configuration où chaque cellule 8a, 9a, 9b du premier ensemble est positionnée à proximité voire au contact de chaque cellule 8b du deuxième ensemble, la chaleur générée par ces cellules 8a, 9a, 9b, 8b va être diffusée plus facilement d'une cellule 8a, 9a, 9b, 8b l'autre, homogénéisant ainsi la température du module 5.

Pour la clarté des figures 4 à 6, le module 5 a été représenté avec treize cellules 8a, 9a, 9b du premier ensemble et douze cellules 8b du deuxième ensemble. Dans ce module 5 ainsi que nous l'avons vu, les cellules 8a, 9a, 9b, 8b des premier et deuxième ensembles sont agencées parallèlement les unes par rapport aux autres selon une succession de cellules 8a, 9a, 9b, 8b alternant entre au moins une cellule 8a, 9a, 9b du premier ensemble et au moins une cellule 8b du deuxième ensemble.

Dans cette configuration les cellules 8a, 9a, 9b appartenant au premier ensemble étant plus nombreuses que celles appartenant au deuxième ensemble, forment alors les parties avant 12a et arrière 12b du module 5 et seront appelées par la suite les première et deuxième cellules 9a, 9b d'extrémité du module 5. Plus précisément, la partie avant 12a du module 5 est alors formée par la première face latérale 10d de la première cellule d'extrémité 9a et pour la partie arrière 12b par la deuxième face latérale 10e de la deuxième cellule d'extrémité 9b. Les cellules 8a, 9a, 9b, 8b des premier et deuxième ensembles qui sont agencées côte à côte, ont leur première face latérale 10d qui est positionnée en regard voire accolée l'une à l'autre, ou leur deuxième face latérale 10e qui est située en regard voire accolée l'une à l'autre. Plus précisément pour chaque cellule 8b du deuxième ensemble située entre deux cellules 8a, 9a, 9b du premier ensemble, les première et deuxième faces latérales 10d, 10e de cette cellule 8b du deuxième ensemble sont agencées voire accolées respectivement à la première face latérale 10d d'une de ces deux cellules 8a, 9a, 9b du premier ensemble et à la deuxième face latérale 10e de l'autre cellule 8a, 9a, 9b de ces deux cellules 8a, 9a, 9b du premier ensemble.

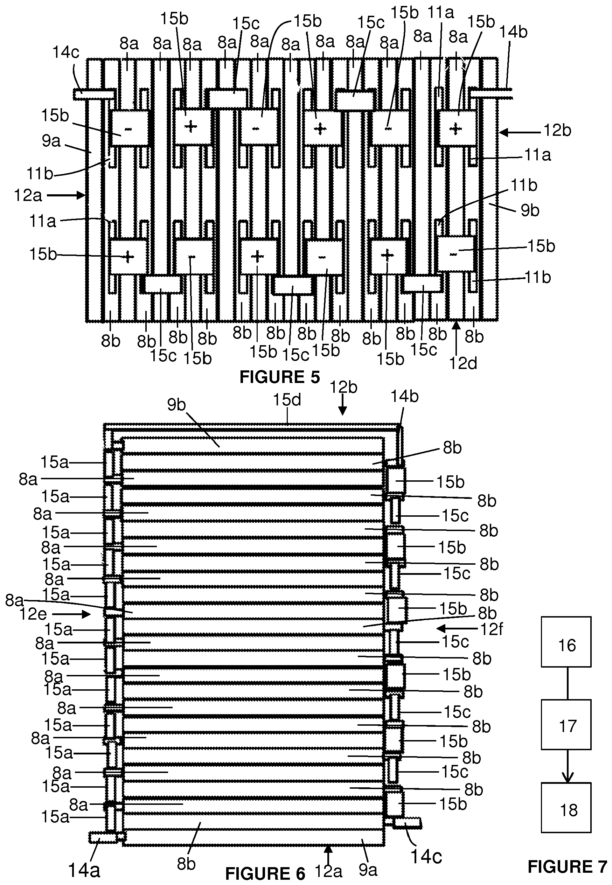

Dans cette configuration, les contacts électriques 11a, 11b :
- des cellules 8a, 9a, 9b du premier ensemble sont localisés au niveau de la première partie latérale 12e du module 5 (visibles sur les figures 4 et 6), et
- des cellules 8b du deuxième ensemble sont situés au niveau de la deuxième partie latérale 12f du module 5 (visibles sur les figures 5 et 6).

On comprend que ces contacts électriques 11a, 11b peuvent être localisés sur n'importe quelle partie 12a à 12f du module 5 c'est-à-dire sur la partie avant 12a, arrière 12b, supérieure 12c, inférieure 12d, la première partie latérale 12e ou la deuxième partie latérale 12f.

Dans cette configuration, les cellules 8a, 9a, 9b du premier ensemble sont alors situées sur une partie 12e du module 5 qui est opposée (c'est-à-dire symétrique par rapport à un axe de symétrie du module 5) à une partie 12f du module 5 sur laquelle sont localisés les contacts électriques 11a, 11b des cellules 8b du deuxième ensemble.

Dans d'autres variantes, les contacts électriques 11a, 11b des cellules 8a, 9a, 9b, 8b des premier et deuxième ensembles peuvent être agencés sur une même partie 12a à 12f du module 5 c'est-à-dire sur la partie avant 12a, arrière 12b, supérieure 12c, inférieure 12d, la première partie latérale 12e ou la deuxième partie latérale 12f.

Le module 5 comprend plusieurs groupe d'éléments de connexion supportant les hautes tensions et les basses tensions, et qui contribuent à réaliser la connexion des cellules 8a, 9a, 9b, 8b des premier et deuxième ensembles en série et/ou en parallèle notamment au niveau de leurs contacts électriques 11a, 11 b. Les éléments de connexion 15a, 15, 15c de ces groupes sont de préférence assemblés sur les contacts électriques 11a, 11b par soudage. Ces éléments sont communément appelés « bus-bars » selon la terminologie anglo-saxonne.

Plus précisément, le module 5 comprend un premier groupe d'éléments de connexion visible sur les figures 4 et 6. Les éléments de connexion 15a du premier groupe relient les cellules 8a, 9a, 9b du premier ensemble en série sur la première partie latérale 12e du module 5. Plus précisément, chaque élément de connexion 15a du premier groupe est apte à assurer une liaison électrique entre deux cellules 8a, 9a, 9b du premier ensemble, en particulier entre deux cellules 8a, 9a, 9b proches l'une de l'autre. Pour ce faire, cet élément de connexion relie les contacts électriques 11a, 11b de polarités opposées de ces deux cellules 8a, 9a, 9b entre eux. Dans ce mode de réalisation, ce premier groupe comprend douze éléments de connexion 15a.

Le module 5 comprend sur sa deuxième partie latérale 12f des deuxième et troisième groupes d'éléments de connexion qui sont visibles sur les figures 5 et 6. Les éléments de connexion 15b du deuxième groupe relient les cellules 8b du deuxième ensemble en parallèle. Plus précisément, deux éléments de connexion 15b du deuxième groupe d'éléments de connexion assurent une liaison électrique entre deux cellules 8b du deuxième ensemble, en particulier entre deux cellules 8b proches l'une de l'autre. Pour ce faire, chacun de ces deux éléments de connexion 15b relie les contacts électriques 11a, 11b de polarités similaires de ces deux cellules 8b entre eux. Dans ce mode de réalisation, ce deuxième groupe comprend douze éléments de connexion 15b.

Les cellules 8b du deuxième ensemble en étant ainsi reliées en parallèle forment alors six bi-cellules. Ces bi-cellules sont susceptibles d'être connectées en série par les éléments de connexion 15c du troisième groupe d'éléments de connexion. Chaque élément de connexion 15c du troisième groupe assure alors une liaison électrique entre deux bi-cellules du deuxième ensemble, en particulier entre deux bi-cellules proches l'une de l'autre. Pour ce faire, l'élément de connexion 15c relie les contacts électriques 11a, 11b de polarités opposées de ces deux bi-cellules entre eux et/ou les éléments de connexion 15b du deuxième groupe qui sont de polarités opposées.

Ainsi, les cellules 8a, 9a, 9b du premier ensemble et les éléments de connexion 15a du premier groupe forment un premier circuit électrique. De même, les cellules 8b du deuxième ensemble et les éléments de connexion 15b des deuxième et troisième groupes forment un deuxième circuit électrique.

Le module 5 comprend également un élément de liaison 15d électrique qui peut également être appelé « bus-bars » selon la terminologie anglo-saxonne et qui est apte à connecter électriquement les premier et deuxième circuits électriques. Cet élément de liaison 15d électrique est situé sur la partie arrière 12b du module 5 et relie le contact électrique 11a libre de la bi-cellule agencée au niveau de la partie arrière 12b du module 5, soit à proximité de la deuxième cellule d'extrémité 9b, au contact électrique libre 11a de la deuxième cellule d'extrémité 9b du module 5 qui est de même polarité. Ainsi la tension aux bornes du deuxième circuit vient s'ajouter à celle présente aux bornes du premier circuit.

De tels groupes d'éléments de connexion permettent de réaliser différentes configurations d'interconnexion des cellules 8a, 9a, 9b, 8b des premier et deuxième ensembles tout en conservant une homogénéisation naturelle de la température au sein du module 5 par conduction.

On notera que dans la variante où les contacts électriques 11a, 11b des cellules 8a, 9a, 9b, 8b des premier et deuxième ensembles sont agencés sur une même partie 12a à 12f du module 5, les différents groupes d'éléments de connexion ainsi que l'élément de liaison 15d électrique le sont aussi. Ainsi dans cette configuration, le module 5 présente une meilleure compacité et est de fait d'un encombrement réduit.

Ainsi que nous l'avons évoqué, le module 5 comprend des première et deuxième bornes de tension positive 14a, 14b et une borne de tension négative 14c. Les première et deuxième bornes de tension positive 14a, 14b sont visibles sur les figures 4 et 6. La première borne 14a est située au niveau de la première cellule d'extrémité 9a du module 5 et plus précisément sur le contact électrique libre 11a de cette première cellule d'extrémité 9a. La deuxième borne de tension est localisée sur le contact électrique libre 11a de la bi-cellule agencée au niveau de la partie arrière 12b du module 5, ou grâce à l'élément de liaison 15d électrique sur le contact électrique libre 11a de la deuxième cellule d'extrémité 9b.

En référence aux figures 5 et 6, la troisième borne de tension négative 14c est quant à elle, située sur le contact électrique libre 11b de la bi-cellule agencée au niveau de la partie avant du module 5, soit à proximité de la première cellule d'extrémité 9a.

Dans ce mode de réalisation, les cellules 8a, 9a, 9b, 8b des premier et deuxième ensembles sont susceptibles de délivrer une tension de l'ordre de 3 à 4 V. La première borne de tension positive 14a est une borne haute tension qui dans ces conditions est susceptible de délivrer une tension comprise entre 45 et 50 V, et de préférence une tension de 48 V. La deuxième borne de tension positive 14b est une borne basse tension qui est susceptible de délivrer une tension comprise entre 11 et 17 V, et de préférence une tension de 14 V.

Un aspect de l'invention concerne un procédé d'assemblage du module 5 de cellules élémentaires 8a, 9a, 9b, 8b, illustré sur la figure 7. Ce procédé comprend une étape d'agencement 16 d'au moins une cellule 8b du deuxième ensemble de cellules élémentaires entre deux cellules 8a, 9a, 9b du premier ensemble de cellules élémentaires.

Ce procédé peut prévoir une étape d'agencement 16 dans laquelle les cellules 8a, 9a, 9b, 8b des premier et deuxième ensembles sont positionnées parallèlement les unes par rapport aux autres selon une succession de cellules 8a, 9a, 9b, 8b alternant entre au moins une cellule 8a, 9a, 9b du premier ensemble et au moins une cellule 8b du deuxième ensemble.

Le procédé comprend ensuite une étape de connexion 17 des contacts électriques 11a, 11b des cellules 8a, 9a, 9b du premier ensemble par les éléments de connexion 15a du premier groupe ainsi que des contacts électriques 11a, 11b des cellules 8b du deuxième ensemble par les éléments de connexion 15b, 15c des deuxième et troisième groupes.

Le procédé comporte par la suite, une étape de liaison 18 du premier circuit électrique avec le deuxième circuit électrique à partir de l'élément de liaison 15d électrique.

La présente invention n'est pas limitée au mode de réalisation qui a été explicitement décrit, mais elle en inclut les diverses variantes et généralisations contenues dans le domaine des revendications ci-après.

## Revendications

1. Module (5) de cellules élémentaires (8a, 9a, 9b, 8b) de stockage d'énergie électrique comprenant un premier ensemble de cellules élémentaires interconnectées de manière à délivrer une première tension dans un premier domaine de haute tension et un deuxième ensemble de cellules élémentaires interconnectées de manière à délivrer une deuxième tension dans un deuxième domaine de basse tension, les premier et deuxième domaines de tension étant différents, **caractérisé en ce que** les cellules élémentaires (8a, 9a, 9b, 8b) des premier et deuxième ensembles sont agencées dans le module (5) selon une succession de cellules élémentaires (8a, 9a, 9b, 8b) alternant entre au moins une cellule (8a, 9a, 9b) élémentaire du premier ensemble et au moins une cellule élémentaire (8b) du deuxième ensemble.

2. Module (5) l'une quelconque des revendications précédentes, **caractérisé en ce que** les contacts électriques positif et négatif (11a, 11b) des cellules (8a, 9a, 9b) élémentaires du premier ensemble sont situés sur une partie (12e) du module (5) opposée à une autre partie (12f) du module (5) sur laquelle sont localisés les contacts électriques positif et négatif (11a, 11b) des cellules (8b) élémentaires du deuxième ensemble.

3. Module (5) l'une quelconque des revendications précédentes, **caractérisé en ce que** les contacts électriques positif et négatif (11a, 11b) des cellules élémentaires (8a, 9a, 9b, 8b) des premier et deuxième ensembles sont situés sur une même partie (12a, 12b, 12c, 12d) du module (5).

4. Module (5) selon l'une quelconque des revendications 2 ou 3, **caractérisé en ce qu'**il comprend :
- des éléments de connexion (15a) d'un premier groupe d'éléments de connexion susceptibles de relier électriquement les contacts électriques (11a, 11b) des cellules (8a, 9a, 9b) élémentaires du premier ensemble entre eux de manière à délivrer la première tension,et
- des éléments de connexion (15b, 15c) d'un deuxième et d'un troisième groupe d'éléments de connexion susceptibles de relier électriquement les contacts électriques (11a, 11b) des cellules (8b) élémentaires du deuxième ensemble entre eux de manière à délivrer la deuxième tension, et
- un élément de liaison (15d) électrique susceptible de connecter un premier circuit électrique formé des cellules (8a, 9a, 9b) élémentaires du premier ensemble et des éléments de connexion (15a) du premier groupe avec un deuxième circuit électrique formé des cellules (8b) élémentaires du deuxième ensemble et des éléments de connexion (15b, 15c) des deuxième et troisième groupes.

5. Module (5) selon l'une quelconque des revendications précédentes, **caractérisé en ce qu'**il comprend des première et deuxième bornes de tension positive (14a, 14b) délivrant respectivement la première et la deuxième tension et une troisième borne de tension négative (14c).

6. Dispositif de stockage d'énergie (4) électrique comprenant au moins un module (5) selon l'une quelconque des revendications précédentes.

7. Procédé d'assemblage d'un module (5) de cellules élémentaires (8a, 9a, 9b, 8b) comprenant une étape d'agencement (16) desdites cellules dans le module (5) selon une succession alternant au moins une cellule élémentaire (8a, 9a, 9b) d'un premier ensemble de cellules élémentaires interconnectées de manière à délivrer une première tension dans un premier domaine de haute tension et une cellule (8b) élémentaire d'un deuxième ensemble de cellules élémentaires interconnectées de manière à délivrer une deuxième tension dans un deuxième domaine de basse tension.

8. Procédé selon la revendication précédente, **caractérisé en ce qu'**il comprend une étape de connexion (17) des contacts électriques (11a, 11b) des cellules (8a, 9a, 9b) du premier ensemble par des éléments de connexion (15a) d'un premier groupe d'éléments de connexion, de manière à délivrer la première tension, et des contacts électriques (11a, 11b) des cellules (8b) du deuxième ensemble par des éléments de connexion (15b, 15c) de deuxième et troisième groupes d'éléments de connexion, de manière à délivrer la deuxième tension.

9. Véhicule automobile notamment électrique ou hybride, comportant un dispositif de stockage d'électricité (4) selon la revendication 6.

## Patentansprüche

1. Modul (5) aus Einzelzellen (8a, 9a, 9b, 8b) zur Speicherung von elektrischer Energie, umfassend eine erste Anordnung aus Einzelzellen, die derart zusammengeschaltet sind, dass sie eine erste Spannung in einem ersten Hochspannungsbereich abgeben, und eine zweite Anordnung aus Einzelzellen, die derart zusammengeschaltet sind, dass sie eine zweite Spannung in einem zweiten Niederspannungsbereich abgeben, wobei der erste und der zweite Spannungsbereich verschieden sind, **dadurch gekennzeichnet, dass** die Einzelzellen (8a, 9a, 9b, 8b) der ersten und der zweiten Anordnung in dem Modul (5) gemäß einer Folge von Einzelzellen (8a, 9a, 9b, 8b) angeordnet sind, die zwischen mindestens einer Einzelzelle (8a, 9a, 9b) der ersten Anordnung und mindestens einer Einzelzelle (8b) der zweiten Anordnung abwechselt.

2. Modul (5) einem der vorhergehenden Ansprüche, **dadurch gekennzeichnet, dass** die positiven und negativen elektrischen Kontakte (11a, 11b) der Einzelzellen (8a, 9a, 9b) der ersten Anordnung an einem Teil (12e) des Moduls (5) gelegen sind, der entgegengesetzt zu einem anderen Teil (12f) des Moduls (5) ist, an dem sich die positiven und negativen elektrischen Kontakte (11a, 11b) der Einzelzellen (8b) der zweiten Anordnung befinden.

3. Modul (5) einem der vorhergehenden Ansprüche, **dadurch gekennzeichnet, dass** die positiven und negativen elektrischen Kontakte (11a, 11b) der Einzelzellen (8a, 9a, 9b, 8b) der ersten und der zweiten Anordnung an demselben Teil (12a, 12b, 12c, 12d) des Moduls (5) gelegen sind.

4. Modul (5) nach einem der Ansprüche 2 oder 3, **dadurch gekennzeichnet, dass** es umfasst:
- Anschlusselemente (15a) einer ersten Gruppe von Anschlusselementen, die geeignet sind, die elektrischen Kontakte (11a, 11b) der Einzelzellen (8a, 9a, 9b) der ersten Anordnung elektrisch derart miteinander zu verbinden, dass sie die erste Spannung abgeben, und
- Anschlusselemente (15b, 15c) einer zweiten und einer dritten Gruppe von Anschlusselementen, die geeignet sind, die elektrischen Kontakte (11a, 11b) der Einzelzellen (8b) der zweiten Anordnung elektrisch derart miteinander zu verbinden, dass sie die zweite Spannung abgeben, und
- ein elektrisches Verbindungselement (15d), das geeignet ist, einen ersten Stromkreis, der aus den Einzelzellen (8a, 9a, 9b) der ersten Anordnung und den Anschlusselementen (15a) der ersten Gruppe gebildet ist, an einen zweiten Stromkreis, der aus den Einzelzellen (8b) der zweiten Anordnung und den Anschlusselementen (15b, 15c) der zweiten und der dritten Gruppe gebildet ist, anzuschließen.

5. Modul (5) nach einem der vorhergehenden Ansprüche, **dadurch gekennzeichnet, dass** es erste und zweite Klemmen für positive Spannung (14a, 14b), welche die erste bzw. die zweite Spannung abgeben, und eine dritte Klemme für negative Spannung (14c) umfasst.

6. Vorrichtung (4) zur Speicherung von elektrischer Energie, umfassend mindestens ein Modul (5) nach einem der vorhergehenden Ansprüche.

7. Verfahren zur Montage eines Moduls (5) aus Einzelzellen (8a, 9a, 9b, 8b), umfassend einen Schritt des Anordnens (16) der Zellen in dem Modul (5) gemäß einer Folge, die mindestens eine Einzelzelle (8a, 9a, 9b) einer ersten Anordnung aus Einzelzellen, die derart zusammengeschaltet sind, dass sie eine erste Spannung in einem ersten Hochspannungsbereich abgeben, und eine Einzelzelle (8b) einer zweiten Anordnung aus Einzelzellen, die derart zusammengeschaltet sind, dass sie eine zweite Spannung in einem Niederspannungsbereich abgeben, abwechselt.

8. Verfahren nach dem vorhergehenden Anspruch, **dadurch gekennzeichnet, dass** es einen Schritt des Anschließens (17) der elektrischen Kontakte (11a, 11b) der Zellen (8a, 9a, 9b) der ersten Anordnung durch Anschlusselemente (15a) einer ersten Gruppe von Anschlusselementen, so dass sie die erste Spannung abgegeben, und der elektrischen Kontakte (11a, 11b) der Zellen (8b) der zweiten Anordnung durch Anschlusselemente (15b, 15c) der zweiten und dritten Gruppe von Anschlusselementen, so dass sie die zweite Spannung abgeben, umfasst.

9. Kraftfahrzeug, insbesondere ein Elektro- oder Hybridfahrzeug, mit einer Vorrichtung zur Speicherung von Elektrizität (4) nach Anspruch 6.

## Claims

1. Module (5) of elementary electrical energy storage cells (8a, 9a, 9b, 8b) comprising a first set of elementary cells that are interconnected so as to supply a first voltage in a first high-voltage range and a second set of elementary cells that are interconnected so as to supply a second voltage in a second low-voltage range, the first and second voltage ranges being different, **characterized in that** the elementary cells (8a, 9a, 9b, 8b) from the first and second sets are arranged in the module (5) in a succession of elementary cells (8a, 9a, 9b, 8b) alternating between at least one elementary cell (8a, 9a, 9b) from the first set and at least one elementary cell (8b) from the second set.

2. Module (5) any one of the preceding claims, **characterized in that** the positive and negative electrical contacts (11a, lib) of the elementary cells (8a, 9a, 9b) from the first set are situated on a part (12e) of the module (5) that is opposite another part (12f) of the module (5) on which the positive and negative electrical contacts (11a, lib) of the elementary cells (8b) from the second set are located.

3. Module (5) any one of the preceding claims, **characterized in that** the positive and negative electrical contacts (11a, 11b) of the elementary cells (8a, 9a, 9b, 8b) from the first and second sets are situated on one and the same part (12a, 12b, 12c, 12d) of the module (5) .

4. Module (5) according to either one of Claims 2 and 3, **characterized in that** it comprises:
- connection elements (15a) from a first group of connection elements that are able to electrically link the electrical contacts (11a, 11b) of the elementary cells (8a, 9a, 9b) from the first set to one another so as to supply the first voltage;
- connection elements (15b, 15c) from a second and from a third group of connection elements that are able to electrically link the electrical contacts (11a, 11b) of the elementary cells (8b) from the second set to one another so as to supply the second voltage, and/or
- an electrical linking element (15d) able to connect a first electrical circuit formed of the elementary cells (8a, 9a, 9b) from the first set and of the connection elements (15a) from the first group to a second electrical circuit formed of the elementary cells (8b) from the second set and of the connection elements (15b, 15c) from the second and third groups.

5. Module (5) according to any one of the preceding claims, **characterized in that** it comprises first and second positive voltage terminals (14a, 14b) supplying the first and the second voltage, respectively, and a third negative voltage terminal (14c).

6. Electrical energy storage device (4) comprising at least one module (5) according to any one of the preceding claims.

7. Method for assembling a module (5) of elementary cells (8a, 9a, 9b, 8b), comprising a step (16) of arranging said cells in the module (5) in a succession alternating at least one elementary cell (8a, 9a, 9b) from a first set of elementary cells that are interconnected so as to supply a first voltage in a first high-voltage range and an elementary cell (8b) from a second set of elementary cells that are interconnected so as to supply a second voltage in a second low-voltage range.

8. Method according to the preceding claim, **characterized in that** it comprises a step (17) of connecting the electrical contacts (11a, 11b) of the cells (8a, 9a, 9b) from the first set using connection elements (15a) from a first group of connection elements, so as to supply the first voltage, and the electrical contacts (11a, 11b) of the cells (8b) from the second set using connection elements (15b, 15c) from second and third groups of connection elements, so as to supply the second voltage.

9. Motor vehicle, in particular an electric or hybrid motor vehicle, including an electricity storage device (4) according to Claim 6.
